# EUROPEAN PATENT APPLICATION

(11) **EP 4 746 356 A1**
(43) Date of publication of application: **20.05.2026**
(21) Application number: 24865620.9
(22) Date of filing: 19.06.2024
(51) Int. Cl.: H04L 12/28, G06N 20/00, H04W 4/80, G06V 30/40, H04L 9/32, G06F 3/14

(54) **ELECTRONIC DEVICE FOR IDENTIFYING EXTERNAL DEVICE, AND OPERATING METHOD THEREOF**

(30) Priority: 11.09.2023 KR 20230120529
(71) Applicant: Samsung Electronics Co., Ltd., Suwon-si, Gyeonggi-do 16677 (KR)
(72) Inventor: KIM, Byuksun, Suwon-si Gyeonggi-do 16677 (KR)
(74) Representative: Gulde & Partner
(86) International application number: PCT/KR2024/008441
(87) International publication number: WO 2025/058176

(57) **Abstract**

This electronic device comprises a connection unit and a processor, wherein the processor is configured to: identify that a first external device is physically connected to the electronic device through the connection unit; identify connection information of the first external device, the identified connection information including device information related to the first external device, image information received from the first external device, and information related to a connection environment of the first external device; determine whether the first external device is a controllable device on the basis of the identified connection information of the first external device and at least one machine learning model for recognizing a plurality of external devices; identify at least one control method of the first external device in response to determining that the first external device is a controllable device; and determine one of the at least one control method as a priority control method.

## Description

### [TECHNICAL FIELD]

Embodiments of the disclosure relate to an electronic device for identifying an external device and an operation method thereof.

### [BACKGROUND ART]

The display device may connect to various input devices (e.g., set-top box, personal computer (PC), or mobile device) and may display a screen based on data received from an input device. A high definition multimedia interface (HDMI) device may connect to a display device through at least one HDMI port provided in the display device. The display device may recognize the connected HDMI device and display a screen based on data received from the HDMI device.

### [DISCLOSURE OF INVENTION]

### [TECHNICAL PROBLEMS]

As the type of external device connected to a display device is diversified, it is required to increase the success rate of recognition of an external device connected to the display device. External devices may be controlled through one or more control schemes, and it is required to adaptively determine priority between the control schemes depending on the type of device or connection environment (e.g., network status or HDMI cable information).

Based on the foregoing discussions, the disclosure provides a device and method for accurately recognizing an external device connected to an electronic device.

The disclosure also provides a method and device for adaptively determining a control scheme that is to be first applied depending on the context when controlling an external device providing a plurality of control schemes.

### [SOLUTION TO PROBLEM]

According to an embodiment of the disclosure, an electronic device includes a connection unit; and a processor configured to identify that a first external device is physically connected to the electronic device through the connection unit, identify connection information about the first external device, the identified connection information including device information about the first external device, image information from the first external device, and information about a connection environment of the first external device, determine whether the first external device is a controllable device based on the identified connection information about the first external device and at least one machine learning model for recognizing a plurality of external devices, identify at least one control scheme of the first external device in response to determining that the first external device is a controllable device, and determine a control scheme of the identified at least one control scheme as a priority control scheme.

According to an embodiment of the disclosure, the electronic device may further include a communication unit. In an embodiment, the processor may be configured to transmit network information to a server device through the communication unit. In an embodiment, the processor may receive the identified connection information about the first external device from the server device. In an embodiment, the network information may include information about another device connected to a same network as the electronic device.

According to an embodiment of the disclosure, the electronic device may further include a communication unit. In an embodiment, the processor may transmit the identified connection information about the first external device to a server device through the communication unit.

According to an embodiment of the disclosure, the process may be configured to, in case that it is determined that the first external device is not a controllable device, transmit the identified connection information about the first external device to a server device.

According to an embodiment of the disclosure, the processor may be configured to, when it is identified that the first external device connected to the electronic device powers on, identify that the first external device is connected to the electronic device through the connection unit.

According to an embodiment of the disclosure, the identified at least one control scheme may include at least one of a first scheme using infrared (IR), a second scheme using an Internet protocol (IP), or a third scheme using a consumer electronics control (CEC).

According to an embodiment of the disclosure, the processor may be configured to display a user interface for determining the priority control scheme of the first external device in response to identifying the at least one control scheme of the first external device. In an embodiment, the user interface may include at least one object indicating the identified at least one control scheme, respectively.

According to an embodiment of the disclosure, the processor may be configured to, in response to identifying a user input selecting an object of the at least one object indicating the identified at least one control scheme, determine a control scheme corresponding to the selected object as the priority control scheme of the first external device.

According to an embodiment of the disclosure, the processor may be configured to identify authentication information received from the first external device. In an embodiment, the processor may be configured to, when the authentication information received from the first external device is valid, determine that the first external device is a controllable device.

According to an embodiment of the disclosure, the processor may be configured to determine whether the authentication information received from the first external device is valid using an optical character recognition (OCR) scheme.

According to an embodiment of the disclosure, the at least one machine learning model for recognizing the plurality of external devices may include at least one of a first machine learning model trained by using device information about a plurality of external devices, a second machine learning model trained by using image information about the plurality of external devices, or a third machine learning model trained by using data about devices failing to connect among the plurality of external devices.

According to an embodiment of the disclosure, the at least one machine learning model may be received from a server device.

According to an embodiment of the disclosure, the connection unit may include a HDMI connection unit.

According to an embodiment of the disclosure, a system includes a display device including a connection unit; a first external device connected to the display device; a server device for managing a plurality of devices connected to the display device; and a second external device for remotely controlling the display device, wherein the display device is configured to: identify that the first external device is physically connected to the display device through a connection unit; identify connection information of the first external device, the identified connection information including device information about the first external device, image information from the first external device, and information about a connection environment of the first external device; determine whether the first external device is a controllable device based on the identified connection information of the first external device and at least one machine learning model for recognizing a plurality of external devices; identify at least one control scheme of the first external device in response to determining that the first external device is the controllable device; and determine a control scheme of the identified at least one control scheme as a priority control scheme, and wherein the server device is configured to: receive, from the display device, network information; identify the connection information about the first external device based on the network information; transmit, to the display device, the connection information about the first external device; and train the at least one machine learning model with the connection information about the first external device.

According to an embodiment of the disclosure, the at least one machine learning model may include at least one of a first machine learning model trained by using device information about the plurality of devices, a second machine learning model trained by using image information about the plurality of devices, or a third machine learning model trained by using data about devices failing to connect among the plurality of devices.

According to an embodiment of the disclosure, the display device may be configured to transmit, to the server device, the data about the devices failing to connect in response to determining that the first external device is not a controllable device. In an embodiment, the server device may be configured to train the third machine learning model based on the transmitted data about the devices failing to connect.

According to an embodiment of the disclosure, the server device may be configured to transmit information about the at least one machine learning model to the display device.

According to an embodiment of the disclosure, the connection unit may include a HDMI connection unit. In an embodiment, the identified at least one control scheme may include at least one of a first scheme using IR, a second scheme using an IP, or a third scheme using the CEC.

According to an embodiment of the disclosure, the second external device may be connected to the display device using a short-range wireless communication technology.

According to an embodiment of the disclosure, when the second external device is a user device, the priority control scheme may be determined as the second scheme.

### [ADVANTAGEOUS EFFECTS]

Embodiments of the disclosure may minimize false recognition of an external device connected to a display device and increase the device recognition rate.

Embodiments of the disclosure may dynamically switch between control schemes considering, e.g., the type of external device or the connection environment, thereby controlling the display device and external device through a control scheme optimized for the user's environment.

Effects of the disclosure are not limited to the foregoing, and other unmentioned effects would be apparent to one of ordinary skill in the art from the following description.

### [BRIEF DESCRIPTION OF DRAWINGS]

FIG. 1 is a block diagram illustrating an example configuration of an electronic device according to an embodiment;
FIG. 2 illustrates an example of an IoT network according to an embodiment;
FIG. 3 is a block diagram illustrating example configurations of devices constituting a system for controlling an electronic device according to an embodiment;
FIG. 4 illustrates an example operation flow of an electronic device according to an embodiment; and
FIG. 5 illustrates an example signaling flow between an electronic device and a server device according to an embodiment;
FIG. 6 illustrates an example of setting control priority according to another electronic device connected to an electronic device according to an embodiment;
FIG. 7 illustrates an example of setting priority of an electronic device controlled by a user device according to an embodiment; and
FIG. 8 illustrates an example of a user interface according to an embodiment.

The same or similar reference denotations may be used to refer to the same or similar elements throughout the specification and the drawings.

### [MODE FOR THE INVENTION]

Various example embodiments of the disclosure are now described in greater detail with reference to the accompanying drawings. However, the disclosure may be implemented in other various forms and is not limited to the various example embodiments set forth herein. The same or similar reference denotations may be used to refer to the same or similar elements throughout the disclosure and the drawings. Further, for clarity and brevity, description of well-known functions and configurations may be omitted in the drawings and relevant descriptions.

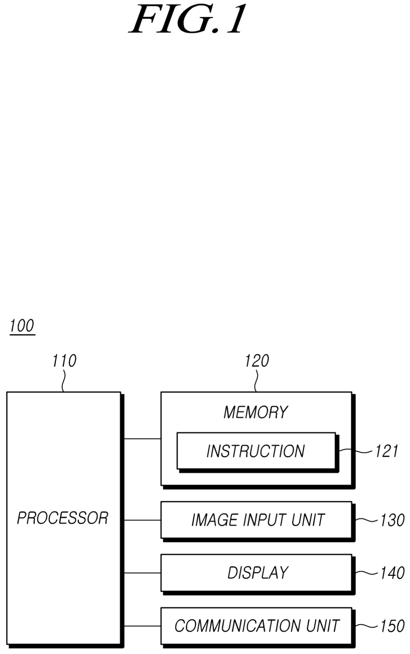

FIG. 1 is a block diagram illustrating an example configuration of an electronic device according to an embodiment. The electronic device 100 may be a wearable terminal, such as a smart watch or glasses, capable of performing various computing functions including video streaming and communication. The electronic device 100 may be various types of terminals without being limited to the above examples.

According to an embodiment, the memory 120 is a storage medium used by the electronic device 100 and may store data, such as at least one command 121 or configuration information corresponding to at least one program. The at least one program may include an operating system (OS) program and/or various application programs.

In an embodiment, the memory 120 may store pairing information about an external electronic device located adjacent to the electronic device 100 or in an area in which a communication connection may be established with the electronic device 100. In an embodiment, the pairing information may include, e.g., device information related to the external electronic device, information about another external electronic device or remote control device paired with the external electronic device, information about a scheme (e.g., Bluetooth or Wi-Fi) in which the external electronic device and the other external electronic device or remote control device are paired with each other, and information about a pairing history between the external electronic device and the other external electronic device or remote control device.

In an embodiment, the memory 120 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input unit 130 may receive images and image information through a tuner (not shown), an input/output unit (not shown), or the communication unit 150. The image input unit 130 may include at least one of the tuner and the input/output unit. The tuner may tune and select only the frequency of the broadcast channel to be received by the electronic device 100 among many radio components, by amplifying, mixing, and resonating the broadcast signals wiredly/wirelessly received. The broadcast signal may include video, audio, and additional data (e.g., electronic program guide (EPG)). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output unit may include at least one of a HDMI input port, a component input jack, a PC input port, and a universal serial bus (USB) input jack capable of receiving an image and image information from an external device of the electronic device 100 under the control of the processor 110. It is obvious to one of ordinary skill in the art that the input/output unit may be added, deleted, and/or changed according to the performance and structure of the electronic device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display, a light emitting diode (LED), a light emitting polymer display (LPD), an organic light emitting diode (OLED), an active-matrix organic light emitting diode (AMOLED), or flexible LED (FLED). The display 140 may display a screen corresponding to data received from the processor 110. The display 140 may be referred to as an 'output unit', a 'display unit', or by other terms having an equivalent technical meaning. "Screen" may include an image displayed on the display of the electronic device. "Image" may be referred to as a frame. Various types of objects, such as icons, text, photos, videos, widgets, etc., may be displayed on the screen.

According to an embodiment, the communication unit 150 may provide a wired/wireless communication interface enabling communication with an external device. The communication unit 150 may include at least one of a wired Ethernet, a wireless local area network (LAN) communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 110. An AP may include a device for connecting devices by related standards using Wi-Fi in a computer network. The short-range communication unit may perform short-range communication wirelessly with an external device under the control of the processor 110. Short-range communication may include Bluetooth, Bluetooth low energy, infrared data association (IrDA), ultra-wideband (UWB), and near-field communication (NFC). The external device may include a server device and a mobile terminal (e.g., phone, tablet, etc.) providing, e.g., a video service.

According to an embodiment, the processor 110 may control at least one other component of the electronic device 100 and/or execute computation or data processing regarding communication by executing at least one command 121 stored in the memory 120. The processor 110 may include at least one of a central processing unit (CPU), a graphic processing unit (GPU), a micro controller unit (MCU), a sensor hub, a supplementary processor, a communication processor (CP), an application processor, an application specific integrated circuit (ASIC), or field programmable gate arrays (FPGA) and may have multiple cores.

In an embodiment, the processor 110 may execute, e.g., software to control at least one other component (e.g., a hardware or software component) of the electronic device 100 connected with the processor 110 and may process or compute various data. According to an embodiment, as at least part of the data processing or computation, the processor 110 may store a command or data received from another component onto a volatile memory, process the command or the data stored in the volatile memory, and store resulting data in a non-volatile memory. According to an embodiment, the processor 110 may include a main processor (e.g., a CPU or an AP), or an auxiliary processor (e.g., a GPU, a neural processing unit (NPU), an image signal processor (ISP), a sensor hub processor, or a CP) that is operable independently from, or in conjunction with, the main processor. For example, when the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the processor may obtain image frame data from at least one of the memory 120, the image input unit 130, or the communication unit 150. The processor may receive image frame data from at least one of the memory 120, the image input unit 130, or the communication unit 150. The image frame data may include data regarding a frame constituting an image. For example, the image frame data may be identified from the memory 120 (e.g., an image recorded and stored). For example, the image frame data may include data obtained from the communication unit 150 or the image input unit 130 (e.g., real-time streaming image).

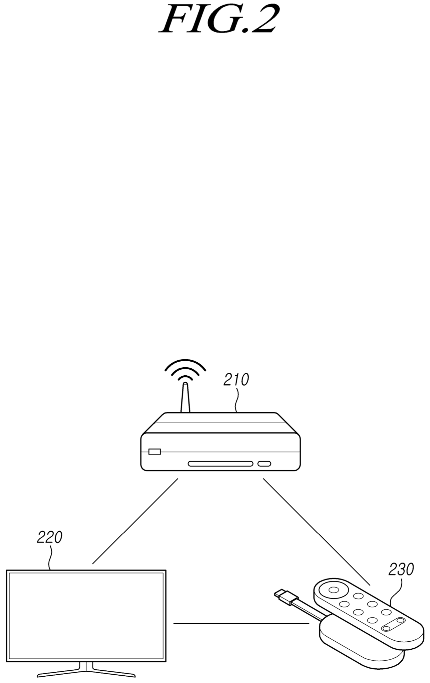

FIG. 2 illustrates an example of an IoT network according to an embodiment. The electronic device 220 of FIG. 2 may be a device corresponding to the electronic device 100 of FIG. 1.

According to an embodiment, the IoT network may include an AP 210, an electronic device 220, and an external device 230.

In an embodiment, the AP 210 may include a device capable of connecting devices adjacent to the AP 210, or in an area in which a communication connection may be established with the AP 210, using a short-range wireless communication technology (e.g., Wi-Fi) in a network.

In an embodiment, the electronic device 220 may include a device for receiving data from the external device 230 or an input device (not shown) (e.g., a set-top box, a USB, a PC, or an HDMI device) and displaying a screen based thereon.

In an embodiment, the electronic device 220 may communicate data with a server device (not shown) through the AP 210. For example, the electronic device 220 may receive at least one machine learning model necessary for recognizing the external device 230 through the AP 210. For example, the electronic device 220 may transmit data associated with information about the external device 230 connected to the electronic device 220 to the server device (not shown) through the AP 210, and the server device (not shown) may train a machine learning model for recognizing the external device 230 based on the information received from the electronic device 220 through the AP 210. For example, the electronic device 220 may transmit network information to the server device (not shown) through the AP 210. The network information may include a multicast domain name (mDNS), a simple service discovery protocol (SSDP), and a medium access control (MAC) address of a device connected to the same AP.

In an embodiment, the external device 230 may include a device for transmitting data such as a video, an image, and an audio to the electronic device 220.

In an embodiment, the external device 230 may receive data from the server device (not shown) through the AP 210 and may provide the received data to the electronic device 220.

In an embodiment, the external device 230 may be physically (e.g., wired) connected to the electronic device 220. The external device 230 may be connected to the electronic device 220 through at least one connection unit provided in the electronic device 220.

In an embodiment, the external device 230 may be connected to the electronic device 220 through a (HDMI port. The external device 230 may include an "HDMI device," an "HDMI machine," an "over-the-top device," and/or an "external electronic device.".

In an embodiment, when the electronic device 220 is connected to the external device 230, the electronic device 220 may identify information about the external device 230. When the electronic device 220 is connected to the external device 230, the information about the external device 230 identified by the electronic device 220 may include InfoFrame information, CEC, and HDMI port information. The information about the external device 230 may include an image received as an IR code information image of a remote control device (e.g., a remote controller). The information about the external device 230 may include sound information and display peripheral sensor information.

In an embodiment, when the electronic device 220 is connected to the external device 230, the electronic device 220 may perform a procedure for recognizing the external device 230. The procedure for recognizing the external device 230 may include a procedure for determining whether the electronic device 220 is capable of supporting a function provided by the external device 230.

In an embodiment, the procedure for recognizing the external device 230 may include a procedure for determining whether the external device 230 may be controlled by the electronic device 220.

In an embodiment, the procedure for recognizing the external device 230 may include an authentication procedure of the external device 230.

In an embodiment, the authentication procedure may be performed using a character recognition technology such as optical character recognition (OCR) based on a pin code.

In an embodiment, the electronic device 220 may be connected to a plurality of other external devices as well as the external device 230. The electronic device 220 may include a plurality of HDMI ports and may be physically or wirelessly connected to the plurality of devices through the plurality of HDMI ports.

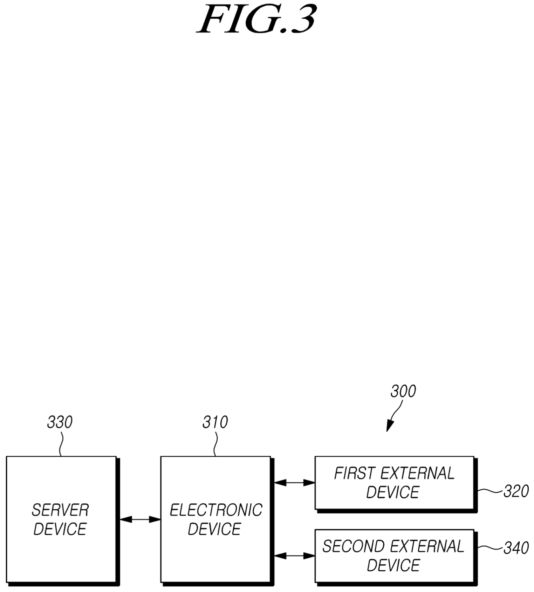

FIG. 3 is a block diagram illustrating example configurations of devices constituting a system for controlling an electronic device according to an embodiment.

According to an embodiment, a system 300 for controlling an electronic device may include an electronic device 310, a first external device 320, a second external device 340, and a server device 330. The electronic device 310 may include a device corresponding to the electronic device 100 of FIG. 1 and the electronic device 220 of FIG. 2. The first external device 320 may include a device corresponding to the external device 230 of FIG. 2.

In an embodiment, the electronic device 310 may be physically (or wirelessly) connected to the first external device 320. For example, the electronic device 310 may be connected to the first external device 320 through an HDMI port included in the electronic device 310.

In an embodiment, the second external device 340 may include a device for remotely controlling the electronic device 310 and the first external device 320. For example, the second external device 340 may include a remote controller and a smartphone.

In an embodiment, the second external device 340 may control the electronic device 310 and the first external device 320 using a short-range communication technology (e.g., Bluetooth, Wi-Fi, IR).

In an embodiment, the first external device 320 may be controlled through at least one control scheme. At least one control scheme may include an IR scheme, an IP scheme, and/or a CEC communication scheme. For example, the IR scheme may include a scheme of controlling the device using IR light. The first external device 320 may be controlled through an IR signal received through the second external device 340. For example, the IP scheme may include a scheme of controlling an HDMI device through a network connection. In order to use the IP scheme, the first external device 320 need to be connected to a network. The first external device 320 may be controlled through a mobile device (e.g., a smartphone). For example, the CEC scheme may include a scheme of controlling various HDMI devices through one remote control device (e.g., the second external device 340) using a cable connected to the HDMI port. Devices supporting the CEC communication may communicate with each other through an HDMI cable.

In an embodiment, the first external device 320 may be controlled through at least one scheme to transmit data (e.g., an image or audio) for displaying a screen to the electronic device 310.

In an embodiment, the server device 330 may manage information for connection of the electronic device 310 and the first external device 320.

In an embodiment, the server device 330 may communicate data with the electronic device 310 and the first external device 320. For example, the server device 330 may transmit image data to the first external device 320, and the first external device 320 may transmit the image data received from the server device 330 to the electronic device 310. For example, the server device 330 may transmit, to the electronic device 310, data associated with at least one machine learning model used by the electronic device 310 to recognize an external device. For example, the server device 330 may receive network information (e.g., mDNS, SDDP, MAC address, etc.) from the electronic device 310.

In an embodiment, the server device 330 may learn (e.g., train) and update at least one machine learning model for recognizing the device, based on the connection information about the electronic device 310 received from the electronic device 310. The connection information may include device information (e.g., model name, manufacturer, or identification information) of an external device connected to the electronic device 310, image information of the external device (e.g., a specific screen element (logo or UI element) of the external device), and information about a connection state of the external device (e.g., Wi-Fi information, HDMI cable information, information about another connected device (e.g., 2^{nd} TV), information about a paired mobile device, or information about a location of the connected device).

In an embodiment, the electronic device 310 may perform a procedure for recognizing the first external device 320 connected to the electronic device 310. The procedure for recognizing the first external device 320 may be used in the same context (e.g., situation or circumstance) as "a procedure for determining whether the first external device 320 is a device that may be controlled by the electronic device 310."

In an embodiment, the electronic device 310 may recognize the first external device 320 using the CEC information.

In an embodiment, the electronic device 310 may recognize the first external device 320 based on video InfoFrame information included in the HDMI signal received from the first external device 320. For example, the InfoFrame information may include image and audio format, resolution, color information, and the like. The electronic device 310 may identify the device capability of the connected first external device 320 using the InfoFrame information. The electronic device 310 may determine whether the electronic device 310 supports the device capability of the first external device 320, based on the identified device capability of the first external device 320, and may recognize the first external device 320 when it is determined that the electronic device 310 supports the device capability.

In an embodiment, the electronic device 310 may identify the first external device 320 based on a specific screen element (e.g., a logo of the first external device 320, an object included in a UI, or an icon) of the first external device 320 received from the first external device 320.

In an embodiment, the server device 330 may include at least one machine learning model.

In an embodiment, the electronic device 310 may analyze the image data through an image analysis engine (e.g., a convolutional neural network (CNN)) using the image data of the first external device 320 as an input. The electronic device 310 may extract features of an image through an image analysis engine. The electronic device 310 may then generate real device data through the image analysis engine. The electronic device 310 may form a final device decision model using the CNN again using the real device data, and the electronic device 310 may identify the first external device 320 using the final device decision model.

In an embodiment, the electronic device 310 may collect various data generated by the first external device 320. In other words, the electronic device 310 may collect and filter various data through a big data collection engine and filtering. The electronic device 310 may identify the feature of data by clustering various pieces of data (e.g., InfoFrame, CEC, and brand-IRCode mapping) collected through the big data collection engine. The electronic device 310 may determine a principal component variable for each manufacturer of the first external device 320. The electronic device 310 may then generate real device data. The real device data may include information related to the length of the cable of the HDMI device (e.g., the time of flight (TOF) of the signal transmitted or received from the HDMI device), the network environment (e.g., stability of the Wi-Fi signal), the location of the external device (e.g., the rear surface or the front surface of the electronic device 310), whether connected to the mobile device, or whether connected to another display device. The electronic device 310 may form a final device decision model based on real device data and a machine learning model. The electronic device 310 may identify the first external device 320 using the final device decision model.

In an embodiment, when there is an error in device recognition, i.e., when false recognition occurs, the electronic device 310 may perform reinforcement learning based on data (e.g., real device data) about the falsely recognized device.

In an embodiment, the electronic device 310 may store all data generated through the image analysis engine, the big data collection engine, the CNN model, and the machine learning model.

In an embodiment, the above-described learning (e.g., learning about image data of the external device or learn about environment data of the external device) may be performed by the server device 330. The server device 330 may transmit, to the electronic device 310, an artificial intelligence model (e.g., a CNN model or a machine learning model) generated based on learning. Although not illustrated in the drawings, the server device 330 as well as the electronic device 310 may perform learning (or training) for the final device recognition model based on image information and device information about the external device connected to the electronic device 310. In other words, the electronic device 310 may use the machine learning model received from the server device 330, as is, and may update the machine learning model, independently (e.g., on its own or autonomously), based on information about external devices connected thereto. The electronic device 310 may transmit information about devices connected to the electronic device 310 to the server device 330 to allow the server device 330 to generate and train the machine learning model described above.

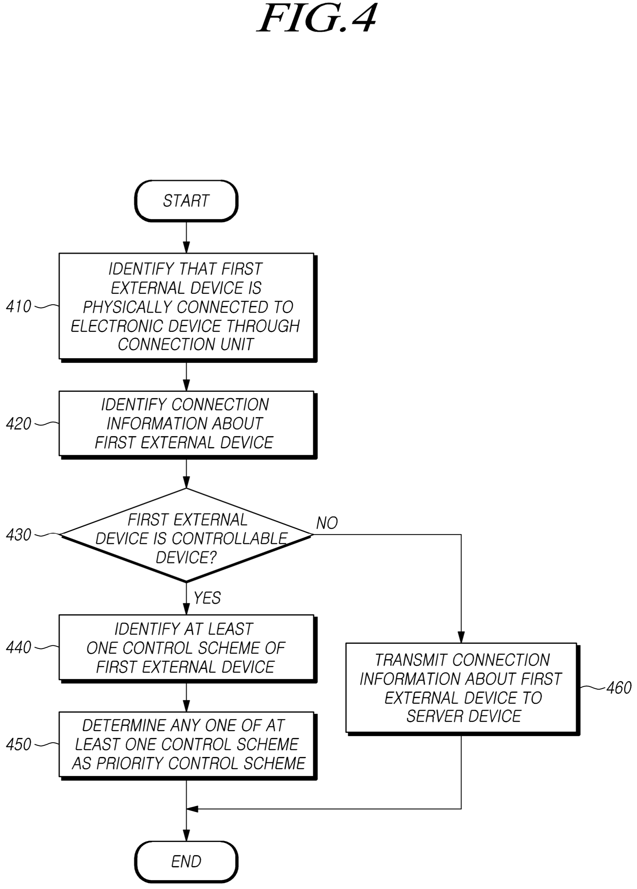

FIG. 4 illustrates an example operation flow of an electronic device according to an embodiment. The electronic device of FIG. 4 may include a device corresponding to the electronic device 100 of FIG. 1, the electronic device 220 of FIG. 2, and the electronic device 310 of FIG. 3. In the description of FIG. 4, the electronic device is described using a TV as an example, and the first external device is described using an HDMI device as an example, but this is merely an example, and the following description may be equally applied to devices connected wiredly or wirelessly. In other words, the same may be applied even when the electronic device is a user device (e.g., a smartphone) and the first external device is an IoT device (e.g., a smart light or a smart switch).

According to an embodiment, in operation 410, the electronic device may identify that the first external device is physically connected to the electronic device through the connection unit.

In an embodiment, the connection unit may include an HDMI connection unit included in the electronic device. According to an embodiment, the electronic device may include a plurality of connection units. The first external device may be connected to the electronic device through an HDMI port.

In an embodiment, when it is identified that the first external device already connected through the connection unit switches from the power-off state to the power-on state, the electronic device may identify that the first external device is physically connected to the electronic device through the connection unit.

According to an embodiment, in operation 420, the electronic device may identify connection information about the first external device.

In an embodiment, the electronic device may identify the connection information about the first external device by independently or may identify the connection information about the first external device from the server device.

In an embodiment, the electronic device may transmit network information (e.g., MDNS, SSDP, MAC address) to the server device. In response to receiving the network information from the electronic device, the server device may transmit connection information about the first external device connected to the electronic device to the electronic device.

In an embodiment, the connection information about the first external device may include device information (e.g., model name, manufacturer, and/or identification information) of an external device connected to the electronic device 310, image information of the external device (e.g., a specific screen element (logo, UI element, etc.) of the external device), and information about a connection state (e.g., environment data) of the external device (e.g., Wi-Fi information, HDMI cable information, information about another connected device (e.g., 2^{nd} TV), information about a paired mobile device, or information about a location of the connected device).

In an embodiment, the electronic device may transmit connection information about the first external device to the server device. The server device may generate or update a final device decision model by training a machine learning model for image analysis and a machine learning model for collecting big data, based on the connection information (image information, device information (environmental data)) received from the first external device.

In an embodiment, the electronic device may train the at least one machine learning model stored in the memory of the electronic device, independently (e.g., on its own or autonomously), based on the connection information about the first external device. The at least one machine learning model may include a first machine learning model trained with device information about external devices (e.g., a first external device) connected to the electronic device, a second machine learning model trained with image information about the external device, and a third machine learning model (e.g., a model for reinforce training of FIG. 3) trained with data about devices failing to connect among the plurality of external devices.

In an embodiment, the data about the devices failing to connect among the plurality of external devices may include information about a configuration set by the electronic device for connection with the external device when recognition fails after connection with the external device.

According to an embodiment, in operation 430, the electronic device may determine whether the first external device is a controllable device. The operation in which the electronic device determines whether the first external device is a controllable device may include an operation in which the electronic device recognizes the first external device.

In an embodiment, the electronic device may determine whether the first external device is a controllable device, based on the connection information about the first external device and at least one machine learning model for device recognition. The electronic device may determine whether the electronic device may support a function provided by the first external device, based on the device information about the first external device. When the electronic device supports a function provided by the first external device, the electronic device may determine that the first external device is a controllable device. When the electronic device identifies that the network (e.g., Wi-Fi) to which the first external device is connected is the same as the network to which the electronic device is connected, the electronic device may determine that the first external device is a controllable device.

In an embodiment, when the authentication procedure of the connected first external device is successful, the electronic device may determine that the first external device is a controllable device. For example, when an authentication procedure is required for recognition of the first external device, the electronic device may request a pin code from the first external device, and the electronic device may identify the pin code received from the first external device using a character recognition (or identification) method such as optical character recognition (OCR), determine whether the pin code is a valid pin code, and perform authentication based thereon.

In an embodiment, even if the information about the first external device input through the first external device is previously input information, the electronic device may form a major cluster and a minor cluster pattern based on at least one machine learning model, and map the same to other machine learning models, recognizing the first external device only when it is a major cluster.

In an embodiment, at least one machine learning model may be received from a server. The at least one machine learning model may include a first machine learning model trained based on image information about an external device, a second machine learning model trained based on device information about the external device and environment data, a third machine learning model trained based on information about external devices failing to connect, and a fourth machine learning model indicating a final device decision model generated based on the first machine learning model, the second machine learning model, and the third machine learning model.

According to an embodiment, when the electronic device determines that the first external device is a controllable device, the electronic device may identify at least one control scheme of the first external device in operation 440. The at least one control scheme may include a first scheme using (IR, a second scheme using IP, and a third scheme using the CEC. Table 1 below may show information about a control scheme of external devices that is connected to or had been connected to the electronic device.

**[Table 1]**

| device/control scheme | IR | IP | CEC | priority |
|---|---|---|---|---|
| A | O | O | | IP |
| B | | O | O | IP |
| C | O | | O | IR |
| D | O | | | IR |
| E | | O | | IP |
| F | | | O | CEC |
| G | O | O | O | IP |

Referring to Table 1, the information about the control schemes of the external devices may include control schemes and a priority control scheme capable of supporting the device A to the device G.

For example, the first scheme is a scheme of controlling a device using an IR signal, and the electronic device may transmit a control signal to the first external device in response to reception of a signal transmitted by a remote control device (e.g., the second external device) by manipulating a physical button for the first external device. For example, the second scheme may include a scheme of controlling a device through a network (e.g., a Wi-Fi network). When the first external device is connected to the same network as the electronic device and has the same IP address, the electronic device may control the first external device. For example, the third method is a technology that enables communication and control between devices connected to the HDMI, and the device may be controlled by transmitting and receiving signals between the electronic device and the first external device through the HDMI cable. HDMI devices supporting the CEC may control each other's functions to the second external device.

According to an embodiment, in operation 450, the electronic device may determine any one of the at least one control scheme as a priority control scheme. The electronic device may determine the priority control scheme based on the machine learning model received from the server or the machine learning model generated by self-learning.

In an embodiment, when the first external device supports a plurality of control schemes, a priority may exist between the plurality of control schemes. A control scheme that is preferentially selected from among the plurality of control schemes may be referred to as a priority control scheme.

In an embodiment, the electronic device may determine a priority control scheme based on device information about the first external device.

According to an embodiment, the electronic device may determine the priority control scheme of the first external device based on the machine learning model for determining the priority, trained based on the connection information about the first external device.

In an embodiment, the electronic device may assign a score to each item (also referred to as a "variable") constituting the device information about the first external device in order to determine the priority control scheme among the at least one control scheme of the first external device and may determine the control scheme having the highest (or higher) score as the priority control scheme. Items constituting the device information about the first external device may include the length of the HDMI cable of the external device, the location of the external device relative to the electronic device, the manufacturer of the external device, the network environment of the external device, the control history of the external device, whether connected to the mobile device, and whether connected to another electronic device.

In an embodiment, an external device having an HDMI cable length of a predetermined value or less may be assigned a higher score than an external device having an HDMI cable length of the predetermined value or more. The electronic device may determine the length of the cable based on the ToF of the signal transmitted/received to/from an external device connected to the electronic device.

In an embodiment, when it is determined by the machine learning model that it is more efficient to control a specific control scheme, the electronic device may determine the specific control scheme as the priority control scheme. For example, the electronic device may determine the IP as the priority control scheme for an external device manufactured by a specific manufacturer, based on the machine learning model trained with a predetermined number of data or more regarding when control through the IR or CES fails.

In an embodiment, the electronic device may assign a score based on the information about the network environment to which the external device is connected. For example, when the network to which the specific external device is connected is the same as the network of the electronic device, a high score may be assigned to the IP control scheme, and when the networks are not the same, a high score may be assigned to a control scheme other than the IP. For example, when the network environment of the electronic device and the external device is not good (e.g., when the data transmission speed is less than or equal to a threshold), a high score may be assigned to a control scheme other than the IP.

In an embodiment, the electronic device may determine a score for each item based on a control failure history of the external device. For example, when the electronic device performs control through the CEC and identifies that the control fails or is not recognized, a high score may be assigned to a control scheme other than the CEC.

Table 2 below shows an example of assigning a score to a control scheme supported for each external device according to the above-described content.

**[Table 2]**

| | IR | IP | CEC |
|---|---|---|---|
| A | 76 | - | 10 |
| B | - | - | - |
| C | - | - | 100 |
| D | - | - | 29 |
| E | 205 | 10 | 50 |
| F | - | 85 | 30 |
| G | - | - | 23 |

Referring to Table 2, a control scheme having a high score for each device may be determined as a priority control scheme.

In an embodiment, the electronic device may determine a priority control scheme of the first external device according to a user setting. As shown in Table 2, the priority control scheme may be determined according to the score, but the user may determine the control scheme of the external device according to the user's convenience (e.g., user selection).

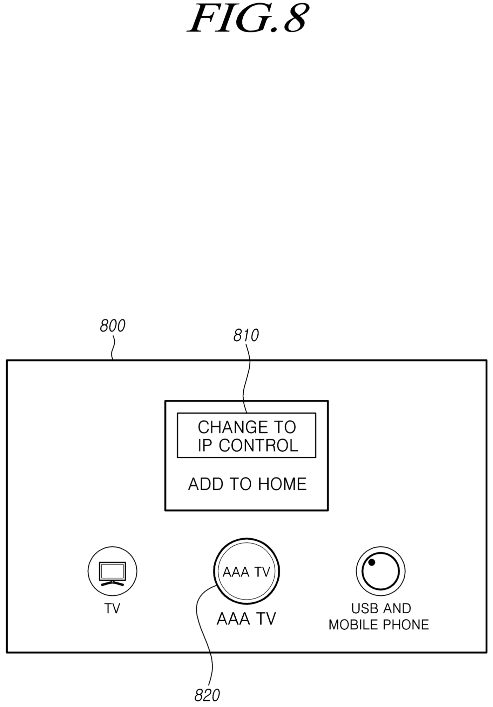

In an embodiment, the electronic device may display a user interface for setting or changing a priority control scheme of the first external device. The user interface for setting or changing the priority control scheme of the first external device may be described below in detail with reference to FIG. 8.

In an embodiment, the electronic device may transmit, to the server device, information about the priority control scheme of the external device and the score of at least one control scheme of the external device. The server device may generate a machine learning model for determining the connection and control scheme of the external device based on the received information about the priority control scheme and the received information about the score of the at least one control scheme.

According to an embodiment, when the electronic device determines that the first external device is not a controllable device in operation 430, the electronic device may transmit connection information about the first external device to the server device.

In an embodiment, the server device may use the connection information about the first external device received from the electronic device for reinforce training. In an embodiment, the electronic device may autonomously use the connection information about the first external device for the purpose (or aim) of reinforce training.

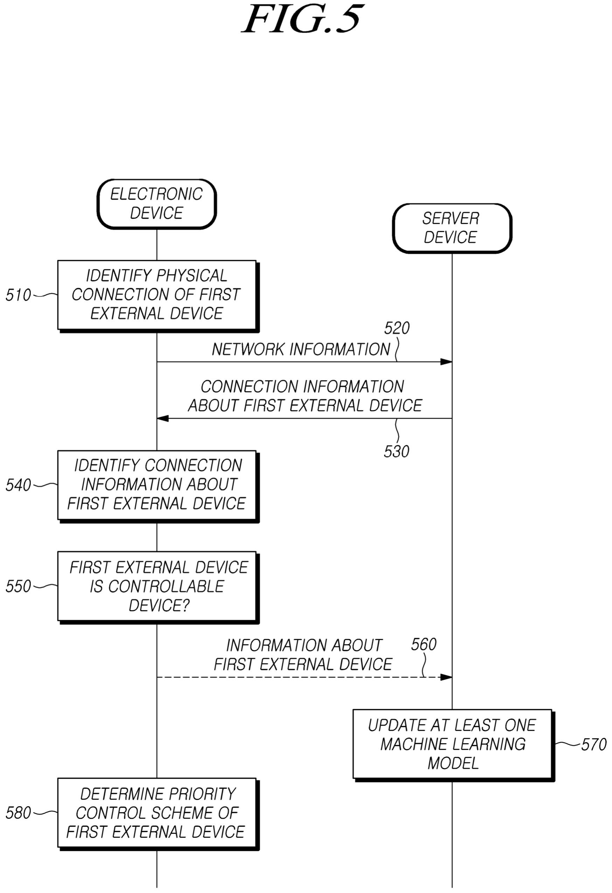

FIG. 5 illustrates an example signaling flow between an electronic device and a server device according to an embodiment. The electronic device of FIG. 5 may include a device corresponding to the electronic device 100 of FIG. 1, the electronic device 220 of FIG. 2, the electronic device 310 of FIG. 3, and the electronic device of FIG. 4. The server device of FIG. 5 may include a device corresponding to the server device 330 of FIG. 3. The operations described in FIG. 5 may correspond to the operations of the electronic device and the operations of the server device of FIG. 4.

According to an embodiment, in operation 510, the electronic device may identify a physical connection of the first external device. Operation 510 may include all the operations of operation 410 of FIG. 4.

According to an embodiment, in operation 520, the electronic device may transmit network information to the server device.

According to an embodiment, in operation 530, the server device may transmit connection information about the first external device to the electronic device in response to receiving the network information from the electronic device.

In an embodiment, the electronic device may transmit network information (e.g., MDNS, SSDP, MAC address) to the server device. In response to receiving the network information from the electronic device, the server device may transmit connection information about the first external device connected to the electronic device to the electronic device.

In an embodiment, the connection information about the first external device may include device information (e.g., model name, manufacturer, and/or identification information) of an external device connected to the electronic device 310, image information of the external device (e.g., a specific screen element (logo, UI element, etc.) of the external device), and information about a connection state (e.g., environment data) of the external device (e.g., Wi-Fi information, HDMI cable information, information about another connected device (e.g., 2^{nd} TV), information about a paired mobile device, or information about a location of the connected device).

In an embodiment, the electronic device may transmit connection information about the first external device to the server device. The server device may generate or update a final device decision model by training a machine learning model for image analysis and a machine learning model for collecting big data, based on the connection information (e.g., image information and/or device information (environmental data)) received from the first external device.

In an embodiment, the electronic device may train the at least one machine learning model stored in the memory of the electronic device, independently (e.g., on its own or autonomously), based on the connection information about the first external device. The at least one machine learning model may include a first machine learning model trained with device information about external devices (e.g., a first external device) connected to the electronic device, a second machine learning model trained with image information about the external device, and a third machine learning model (e.g., a model for reinforce training of FIG. 3) trained with data about devices failing to connect among the plurality of external devices.

According to an embodiment, in operation 540, the electronic device may identify connection information about the first external device. FIG. 5 may include all the operations according to operation 420 of FIG. 4.

According to an embodiment, in operation 550, the electronic device may determine whether the first external device is a controllable device. Operation 550 may include all the operations according to operation 430 of FIG. 4.

According to an embodiment, in operation 560, the electronic device may transmit information about the first external device to the server device.

In an embodiment, the information about the first external device may include all the connection information about the first external device and information (e.g., network information) related to the connection of the first external device when the connection of the first external device fails.

According to an embodiment, in operation 570, the server device may update at least one machine learning model based on the information about the first external device received in operation 560.

According to an embodiment, in response to determining that the first external device is a controllable device, in operation 580, the electronic device may determine a priority control scheme of the first external device. Operation 580 may include all the operations according to operation 440 and operation 450 of FIG. 4.

In an embodiment, in response to determining that the first external device is not a controllable device, the electronic device may transmit, to the server device, all information (e.g., network information, connection information (e.g., device information, image information, environment data, etc.), or data regarding connection failure) obtained by the electronic device for the first external device. The server device may perform reinforce training based thereon, and accordingly, update a machine learning model (final device decision model) for device identification (e.g., device recognition).

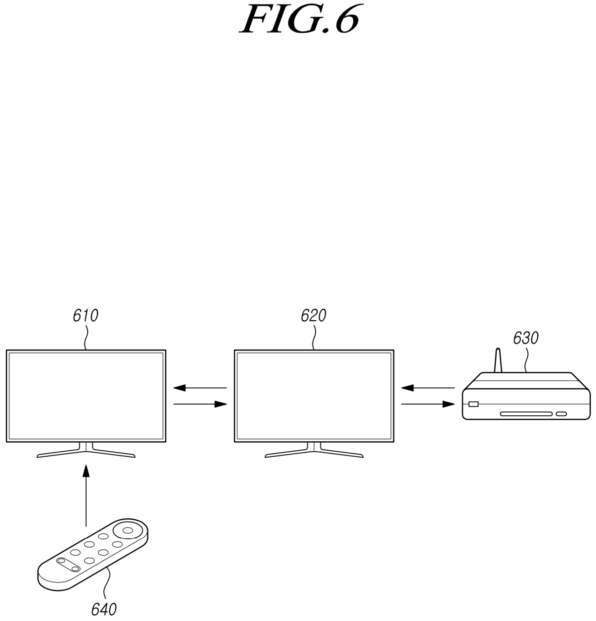

FIG. 6 illustrates an example of setting control priority according to another electronic device connected to an electronic device according to an embodiment. The electronic device 610 and the electronic device 620 of FIG. 6 may be devices corresponding to the electronic device 100 of FIG. 1. The AP 630 of FIG. 6 may correspond to the AP 210 of FIG. 2. The second external device 640 of FIG. 6 may include a device corresponding to the second external device 340 of FIG. 3.

Referring to FIG. 6, the first electronic device 610 may be controlled through the second external device 640. The first electronic device 610 may receive a control signal from the second external device 640 through short-range wireless communication technology. The first electronic device 610 may transmit a control signal to the second electronic device 620. The second electronic device 620 may receive data from the AP 630 through communication with the AP 630. The second electronic device 620 may transfer data received from the AP 630 to the first electronic device 610, and accordingly, the first electronic device 610 may display a screen.

In an embodiment, the second electronic device 620 may be controlled using a second scheme using IP. When the second electronic device 620, the first electronic device 610, and an external device (not shown) connected to the first electronic device, and an external device (not shown) connected to the second electronic device 620 are present (e.g., provided or exist), the devices may also be controlled using the second scheme using IP. In other words, for another electronic device connected to the electronic device, a scheme using IP may be determined as the priority control scheme to enhance control reliability.

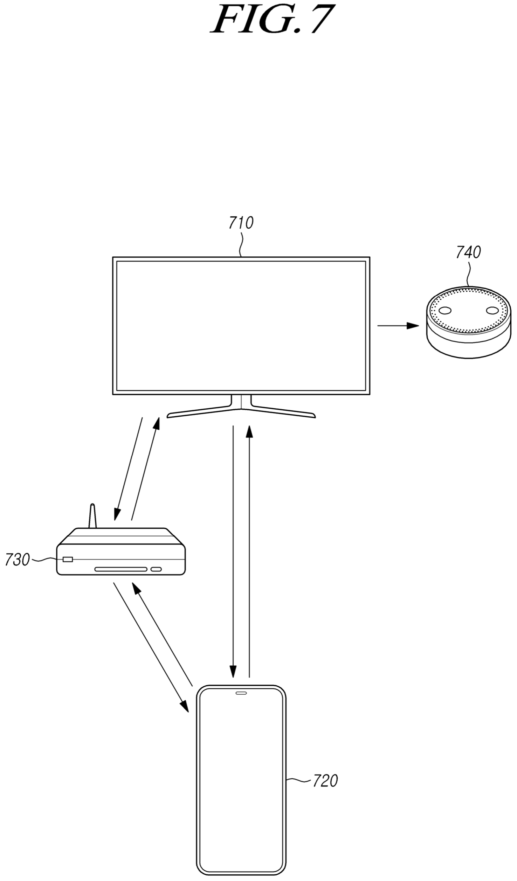

FIG. 7 illustrates an example of setting priority of an electronic device controlled by a user device according to an embodiment.

Referring to FIG. 7, an electronic device 710 may include an electronic device corresponding to the electronic device 100 of FIG. 1. The user device 720 of FIG. 7 may include a mobile device (e.g., a smartphone). The AP 730 of FIG. 7 may include a device corresponding to the AP 210 of FIG. 2.

In an embodiment, when the electronic device 710 is controlled by the user device 720, a priority control scheme of the electronic device 710 and an external device (not shown) connected to the electronic device 710 may be determined as a second control scheme using IP. In order to enhance control reliability by allowing control to be performed only between devices using (e.g., connected to or on) the same network, the second control scheme may be determined as a priority control scheme.

FIG. 8 illustrates an example of a user interface according to an embodiment.

In an embodiment, the user interface 800 may be displayed in response to identifying that the first external device is physically connected to the electronic device through the connection unit.

In an embodiment, the user interface 800 may be displayed in response to identifying a user input for changing the control scheme of the first external device.

In an embodiment, the user interface 800 may be displayed in response to detection of an event for changing the control scheme by the electronic device. The event for changing the control scheme may include detecting a change in the network environment or a change in the connected device (e.g., when another external device is additionally connected, or when previous connection of another external device is released).

In an embodiment, the user interface 800 may include a second object 820 indicating the external device connected to the electronic device. The second object 820 may be displayed based on image information about the external device connected to the electronic device. For example, the second object 820 may include an icon corresponding to the logo image of the external device.

In an embodiment, the user interface 800 may include a first object 810 indicating an object for changing the control scheme of the selected external device.

In an embodiment, in response to identifying the user input for selecting the second object 820, the electronic device may display a UI component including the first object 810.

In an embodiment, when the user input is identified through the first object 810, the electronic device may change the control scheme of the selected external device. For example, referring to FIG. 8, when the user input is identified through the first object 810, the control scheme of the selected "AAA TV" may be changed to the second control scheme using the IP.

According to the above-described embodiments, it is possible to provide a control scheme optimized for the user environment by dynamically changing the control scheme using various parameters, such as the location (e.g., on the rear, side, or front of the TV) of the HDMI device connected to the electronic device, the length of the HDMI cable, or Wi-Fi environment. Further, although there is a priority control scheme set for the external device and the electronic device, the priority control scheme is permitted to be changed (e.g., updated), thereby enhancing user experience. Further, during TV-mobile remote control or TV-second TV control, the control priority may be given to the IP to stably operate remote control, thereby enhancing the reliability of device control. Further, at least one machine learning model transmitted from the server device may be continuously updated based on data exchange and training between the electronic device and the server device, and false recognition may be prevented. It is possible to accurately recognize a device based on such a machine learning model although the type of external device connected or the connection environment is changed.

An electronic device according to an embodiment of the disclosure may comprise a connection unit, memory storing at least one machine learning model for recognizing a plurality of external devices, and a processor electrically connected to the connection unit and the memory. In an embodiment, the processor may identify that a first external device is physically connected to the electronic device through the connection unit. In an embodiment, the processor may identify connection information about the first external device. In an embodiment, the processor may determine whether the first external device is a controllable device based on the connection information about the first external device and the at least one machine learning model. In an embodiment, the processor may identify at least one control scheme of the first external device in response to determining that the first external device is the controllable device. In an embodiment, the processor may determine any one of the at least one control scheme as a priority control scheme. In an embodiment, the connection information about the first external device may include device information about the first external device, image information, and information about a connection environment.

In an embodiment, the electronic device may further comprise a communication unit connected to the processor. In an embodiment, the processor may transmit network information to a server device through the communication unit. In an embodiment, the processor may receive the connection information about the first external device from the server device. In an embodiment, the network information may include information about another device connected to the same network as the electronic device.

In an embodiment, the electronic device may further comprise a communication unit electrically connected to the processor. In an embodiment, the processor may transmit the connection information about the first external device to a server device through the communication unit.

In an embodiment, when it is determined that the first external device is not the controllable device, the processor may transmit the connection information about the first external device to a server device.

In an embodiment, the processor may, when it is identified that the first external device connected to the electronic device powers on, identify that the first external device is connected to the electronic device through the connection unit.

In an embodiment, the at least one control scheme may include at least one of a first scheme using IR, a second scheme using an IP, or a third scheme using the CEC.

In an embodiment, the processor may display a user interface for determining the priority control scheme of the first external device in response to identifying the at least one control scheme of the first external device. In an embodiment, the user interface may include at least one object indicating the at least one control scheme, respectively.

In an embodiment, in response to identifying a user input selecting any one of the at least one object indicating the at least one control scheme, the processor may determine a control scheme corresponding to the selected object as the priority control scheme of the first external device.

In an embodiment, the processor may identify authentication information from the first external device. In an embodiment, the processor, when the authentication information received from the first external device is valid, may determine that the first external device is the controllable device.

In an embodiment, the processor may determine whether the authentication information received from the first external device is valid using an optical character recognition (OCR) scheme.

In an embodiment, at least one machine learning model for recognizing the plurality of external devices may include at least one of a first machine learning model trained with device information about a plurality of external devices, a second machine learning model trained with image information about the plurality of external devices, or a third machine learning model trained with data about devices failing to connect among the plurality of external devices.

In an embodiment, the at least one machine learning model may be received from a server device.

In an embodiment, the connection unit may include a HDMI connection unit.

A system according to an embodiment of the disclosure may comprise a display device, a first external device connected to the display device, a server device for managing a plurality of devices connected to the display device, and a second external device for remotely controlling the display device. In an embodiment, the display device may identify that the first external device is physically connected to the display device through a connection unit. In an embodiment, the display device may identify connection information about the first external device. In an embodiment, the display device may determine whether the first external device is a controllable device based on the connection information about the first external device and at least one machine learning model. In an embodiment, the display device may identify at least one control scheme of the first external device in response to determining that the first external device is the controllable device. In an embodiment, the display device may determine any one of the at least one control scheme as a priority control scheme. In an embodiment, the server device may receive network information from the display device. In an embodiment, the server device may identify the connection information about the first external device based on the network information. In an embodiment, the server device may transmit the connection information about the first external device to the display device. In an embodiment, the server device may train the at least one machine learning model with the connection information about the first external device.

In an embodiment, the at least one machine learning model may include at least one of a first machine learning model trained with device information about the plurality of devices, a second machine learning model trained with image information about the plurality of devices, or a third machine learning model trained with data about devices failing to connect among the plurality of devices.

In an embodiment, the display device may transmit, to the server device, the data about the devices failing to connect in response to determining that the first external device is not the controllable device. In an embodiment, the server device may train the third machine learning model based on the data about the devices failing to connect.

In an embodiment, the server device may transmit information about the at least one machine learning model to the display device.

In an embodiment, the connection unit may include a HDMI connection unit. In an embodiment, the at least one control scheme may include at least one of a first scheme using IR, a second scheme using an IP, or a third scheme using the CEC.

In an embodiment, the second external device may be connected to the display device using a short-range wireless communication technology.

In an embodiment, when the second external device is a user device, the priority control scheme may be determined as the second scheme.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry." A part or module may be a single integral component, or a minimum unit or part thereof, adapted to perform one or more functions. For example, according to an embodiment, 'part' or 'module' may be implemented in a form of an ASIC.

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a connection unit; and
a processor configured to:
identify that a first external device is physically connected to the electronic device through the connection unit,
identify connection information about the first external device, the identified connection information including device information about the first external device, image information from the first external device, and information about a connection environment of the first external device,
determine whether the first external device is a controllable device based on the identified connection information about the first external device and at least one machine learning model for recognizing a plurality of external devices,
identify at least one control scheme of the first external device in response to determining that the first external device is a controllable device, and
determine a control scheme of the identified at least one control scheme as a priority control scheme.

2. The electronic device of claim 1, further comprising:
a communication unit,
wherein the processor is configured to:
transmit, to a server device, network information through the communication unit, and
receive, from the server device, the identified connection information about the first external device,
wherein the network information includes information about another device connected to a same network as the electronic device.

3. The electronic device of claim 1, further comprising:
a communication unit,
wherein the processor is configured to transmit, to a server device, the identified connection information about the first external device through the communication unit.

4. The electronic device of claim 1, wherein
the processor is configured to, in case that it is determined that the first external device is not a controllable device:
transmit, to a server device, the identified connection information about the first external device.

5. The electronic device of claim 1, wherein
the processor is configured to, in case that it is identified that the first external device connected to the electronic device powers on:
identify that the first external device is connected to the electronic device through the connection unit.

6. The electronic device of claim 1, wherein
the identified at least one control scheme includes at least one of a first scheme using infrared (IR), a second scheme using an internet protocol (IP), or a third scheme using consumer electronics control (CEC).

7. The electronic device of claim 1, wherein
the processor is configured to:
display a user interface for determining the priority control scheme of the first external device in response to identifying the at least one control scheme of the first external device, and
the user interface includes at least one object indicating the identified at least one control scheme, respectively.

8. The electronic device of claim 7, wherein
the processor is configured to:
in response to identifying a user input selecting an object of the at least one object indicating the identified at least one control scheme, determine a control scheme corresponding to the selected object as the priority control scheme of the first external device.

9. The electronic device of claim 1, wherein
the processor is configured to:
identify authentication information received from the first external device, and
in case that the authentication information received from the first external device is valid, determine that the first external device is a controllable device.

10. The electronic device of claim 9, wherein
the processor is configured to determine whether the authentication information received from the first external device is valid using an optical character recognition (OCR) scheme.

11. The electronic device of claim 1, wherein
the at least one machine learning model for recognizing the plurality of external devices includes at least one of a first machine learning model trained by using device information about a plurality of external devices, a second machine learning model trained by using image information about the plurality of external devices, or a third machine learning model trained by using data about devices failing to connect among the plurality of external devices.

12. The electronic device of claim 11, wherein
the at least one machine learning model is received from a server device.

13. The electronic device of claim 1, wherein
the connection unit includes a high-definition multimedia interface (HDMI) connection unit.

14. A system, comprising:
a display device including a connection unit;
a first external device connected to the display device;
a server device for managing a plurality of devices connected to the display device; and
a second external device for remotely controlling the display device,
wherein the display device is configured to:
identify that the first external device is physically connected to the display device through a connection unit;
identify connection information of the first external device, the identified connection information including device information about the first external device, image information from the first external device, and information about a connection environment of the first external device;
determine whether the first external device is a controllable device based on the identified connection information of the first external device and at least one machine learning model for recognizing a plurality of external devices;
identify at least one control scheme of the first external device in response to determining that the first external device is the controllable device; and
determine a control scheme of the identified at least one control scheme as a priority control scheme, and wherein the server device is configured to:
receive, from the display device, network information;
identify the connection information about the first external device based on the network information;
transmit, to the display device, the connection information about the first external device; and
train the at least one machine learning model with the connection information about the first external device.

15. The system of claim 14, wherein
the at least one machine learning model includes at least one of a first machine learning model trained by using device information about the plurality of devices, a second machine learning model trained by using image information about the plurality of devices, or a third machine learning model trained by using data about devices failing to connect among the plurality of devices.
